Europäisches Patentamt

European Patent Office

Office européen des brevets

(19)

(11) EP 1 217 560 A1

## (12) EUROPEAN PATENT APPLICATION

(43) Date of publication:
26.06.2002 Bulletin 2002/26

(51) Int Cl.⁷: G06F 17/60

(21) Application number: 00830842.1

(22) Date of filing: 22.12.2000

(84) Designated Contracting States:
AT BE CH CY DE DK ES FI FR GB GR IE IT LI LU
MC NL PT SE TR
Designated Extension States:
AL LT LV MK RO SI

(71) Applicants:
• Bottigelli, William
29100 Piacenza (IT)

• Giuliani, Ivo
00188 Roma (IT)

(72) Inventors:
• Bottigelli, William
29100 Piacenza (IT)
• Giuliani, Ivo
00188 Roma (IT)

(54) **Method of incentive delivery of interactive advertisement contents inside an internet domain characterized by user profiling**

(57) A method for the delivery of interactive advertisement contents within an Internet domain with profiled users. The advertisement is forwarded towards the PC clients by an Internet provider connected to a supplier of the advertising service, which gives free the navigation costs to the subscribers of the advertising service. The user browser displays an initial short lasting advertisement initial image, animated and at full screen, and subsequent shock-wave images at regular intervals during the navigation. While an advertising image remains on the PC monitor, downloading from possible connected Web sites is not stopped. The advertising screen includes highlighted fields on which the user can click to answer to questions associated to the enjoyed content. Answering to the questions makes the advertising image disappear, and the interrupted navigation restarts up to the next break. Missing an answer to the questions during the staying of the page will cause the end of the connection. Interactions by the users on interactive contents are statistically processed by the server, which obtains user profiles to be used for the targeted selection of the next advertisement pages. The communication software of the Server synchronizes the telecasting of the next page with the instant the previous one begins to be observed.

Fig. 1

EP 1 217 560 A1

**Description**

**Field of the invention**

The present invention relates to the sector of the proposition of advertisement contents through data networks, and more in particular to a method of incentive delivery of interactive advertisement contents within an Internet domain characterized by user profiling.

**Background art**

The sector of the technique indicated in the previous paragraph, particularly in the case in which data networks coincide with the Internet network could take advantage of the same user profiling technique already employed in marketing-oriented interactive television systems. From the historical point of view, a first target of the interactive TV was the one implemented by the broadcasters to offer the viewers an electronic guide (Electronic Program Guide) to the best scheduling of the programs, made on the basis of the previous audience preferences. The tool employed to this purpose consisted in the statistical processing of information coming from the systematic recording of interactions made by the single users with the remote control, in order to obtain an individual user profile oriented to preferential audience sectors. The profiles formed and still form a " virtual personality " built in a completely automatic way on the free preferences (interactions) expressed by the users during the fruition of the visual contents of a service. In the marketing world, they soon cogitated to take advantage of the intrinsic value of profiling from the commercial point of view. This is due to the fact that the characteristic features of the virtual personality, opportunely extrapolated, give indications on the willingness to purchase of a class of products rather than another one. Therefore, it is possible to employ the user profiles to diffuse targeted advertisement, suitable to tailor the offer for goods and/or services on individual preferences. This operation mode is known as offer targeting.

Different electronic industries, mainly North American, have pressingly entered the Interactive TV sector and have faced the problems of the profiling and targeting in a scientific way, both on the mathematical side and on the system architecture one. Patented systems of Interactive TV at the Applicant's knowledge, describe indifferently all the examples of profiling and targeting extended to the most recent opportunities offered by Internet, or by the cable TV.

A significant example in this concern, is included in the PCT application published under No WO 0049801, under the title: "SYSTEM AND METHOD FOR TAILORING TELEVISION AND/OR ELECTRONIC PROGRAM GUIDE FEATURES, SUCH AS ADVERTISING", filed in the name of INDEX SYSTEMS INC. The application describes an interactive television system applied to the contents of the VBI channel (Vertical Blanking Interval) for the generation of an EPG electronic guide stuffed with advertisements. The software for the user profiling has recourse to a probability-based model denoted with the acronym PBPP (Probability Based Psychological Profile) capable of handling the three uncertainties existing in any data collection process: (a) uncertainty in definition, (b) uncertainty in quality, (c) uncertainty in sampling. The broadcast information reaching the user is submitted to a selection process, simulating a probabilistic coupled filter. This filter lets through only the information set, whose content has the highest score in a formula that keeps into account the preference expressed by the user and summarized in his or her PBPP profile. The text of the application mentioned above explains how to build the PPBP profile of a person on statistical bases, and which are the relevant features. In short, it was defined as a running average of the "scores" a person receives, weighted with the view duration of a show. As the number of shows viewed increases, the statistical information contained in the PPBP profile increases as well, until it takes the role of "virtual personality" of the observed user, limited to the aims of the television audience. The profile thus obtained can still be improved on the basis of the psycho-demographic information associated to television programs. This information is included in a database kept by the central provider and sent to the users according to the intended methods.

The above-mentioned INDEX SYSTEMS INC. patent application discloses, as already said, an extension to the Internet context of the profiling and filtering procedure used in Interactive TV. The developments for Internet are referred to the typical client/server model, where the server is a host computer performing the TCP/IP protocol, and which is identified by a unique IP address corresponding to an Internet domain name (for instance: name.com). The server controls the service requests sent by the different clients to the different URL addresses (Uniform Resource Locator) of the World Wide Web (WWW). To attain this purpose, a software capable to support a HTTP protocol (HyperText Transport Protocol) is installed in the server. Consequently, the URL address of the server shall be of the type: http://www.name.com.

The services offered by Internet, through the communication software of a server, usually consist: in searching for information on subjects present in the on-line databases (information retrieval), in file transferring, in transmitting

Web pages by an addressed site, in inserting into the network a home page generated by the user, in managing of electronic mail (e-mail), of a mailing-list, of a chat group (news groups), etc. The clients are configured through the resources of a personal computer (PC) equipped with a software for Internet navigation, called browser, which dialogues with the server according to the standards of the TCP/IP protocol (Transmission Control Protocol / Internet Protocol) and of the PPP protocol (Point-to Point Protocol) for serial lines. A significant aspect of the invention in the name of INDEX SYSTEMS INC. introduces a software agent, called "smart agent", locally residing on a client PC to integrate the habits, statistical data and psycho-demographic information of the Internet user, in order to infer the relevant profile. The smart agent can also utilize the recorded preferences to filter the information supplied to the local PC. The above-mentioned information can be of the promotional or advertisement type, or referred to any other subject. In particular, the agent gathers, combines, integrates, and infers the information received to obtain a psycho-demographic profile of the user, and employs such a profile to filter the information addressed to the user, thus achieving the targeting of the proposal. The agent can also classify and identify the information delivered, in order that the same can be coupled, filtered or easily selected.

The smart agent is a program conceived to collect information, such as for instance, the type and frequency of visited Web sites, and the type of information searched by the user. The smart agent can also make searches in Internet according to the interest of the user, based on the profile obtained from the visits made on Web sites, Newsgroups, and similar. The data found can be placed in an ordered list (sort) on the basis of the degree of compliance with the profile. This activity of gathering news from a variety of sources can also be developed in an independent way by the Agent while the user is not using the computer, or is using it for other tasks.

In accordance with an embodiment of the above-mentioned invention, the software of the agent can be written as applet of the Java programming language. Or it can be written using the standard Active XTM language developed by Microsoft.

In accordance with an additional aspect of the INDEX SYSTEMS INC. invention, when the profile of a user has been determined, the so called push technology can be used to deliver him or her contents that can be better combined to the relevant profile, such as for instance the advertisement or the characteristics of a product. The push technology is a more recent betterment of the research on Web, developed to enable the user to navigate off—line, thus saving connection costs and avoiding to saturate the lines. The push technology overturns the traditional approach that sees the user as the active subject in the navigation on Web, since in this case the network downloads the updated information directly in the user PC. The prerequisite is that the user initially expresses a preference for a site, or more sites, collectively called "channels", afterwards at each connection to the network, a "synchronization" session of a channel can optionally start, in which only the updating of the previous content is downloaded. A channel generally refers to an area of interest created by an editor, which can include: Web pages written in HTML language (HyperText Markup Language), applets Java, Active XTM components, multimedia objects, and other information packets in such a way as to supply the users with a customized information, suitable to the transfer according to the push technology. This technology is presently included in the most popular browsers, such as for instance Netscape Communicator and Microsoft Internet Explorer.

**Drawbacks of the background art**

The technical problems that will be highlighted hereafter for the system disclosed in the patent application in the name of INDEX SYSTEMS INC., are common to other systems included in the same sector of the industry, and carefully examined by the Applicants. Therefore, it is possible to mention the sole document INDEX SYSTEMS INC. as representative of the profiling and targeting systems that extend the methods developed for the Interactive TV to the Internet world. The conclusion drawn in analyzing this sole prior document are therefore valid for other prior systems of the sector.

An absolutely necessary preliminary statement is that a profiling and targeting system operating in the Internet world must necessarily face problems that are peculiar of terrestrial data networks, rather than with problems typical of the broadcast TV. To confirm what stated above on the difference in technical problems peculiar of the two above mentioned operating environments, it is useful to consider Interactive TV systems where one wants to privilege confidentiality and anonymity, just like the INDEX SYSTEMS INC. system based on a TV approach. In such a system, the advertisement contents supplied by the provider are broadcast on the VBI channel towards all the users without exceptions. The user avail of a set-top box to receive the broadcast signal, decode the VBI contents, store the decoded advertisement contents on a hard disk, and then submit to filtering the stored contents to extract those that better match their individual audience profile. Filtered contents are then displayed on the screen of the television set. Each profile is updated on the basis of a file storing all the interactions made by the user with the remote control on the contents of the services enjoyed on the TV screen, in a pre-set time interval. The immediate consequence of this system philosophy is to have to install the profiling and filtering software in the user set-top boxes. Afterwards, all the information on profiling remains confined to the user station. In such a system the advertising service provider cannot have any confirmation on the effectiveness of the broadcast contents and he shall necessarily have recourse to a statistical sample of users contractually derogating from the anonymity clause to obtain the desired feedback.

In the Internet world these "anonymous" profiling and targeting systems cannot be realized for the following reasons:

1. the connection between the Internet provider and one user is a point-to-point connection forcedly requiring the knowledge of the user personal data for the subscription of the supply contract for an access to Internet network, and for the undertaking of the provider's responsibilities towards the authorities of concern. Addressing of Web pages requires also to identify the user, though in an indirect and password-protected way, yet having effect towards the network.

2. The connection between the central provider and the plurality of users cannot be assimilated to a broadcast connection, even if it enables the dissemination of an electronic mail message to all the users. In fact, in a television broadcast the connection is of the point-multipoint type and the information transmitted simultaneously reaches all the users without the need for any routing. On the contrary, Internet connections among the users and the central provider have to be considered as the sum of point-to-point connections, since each connection maintains its own individual character and requires therefore a routing.

3. In an "anonymous" Interactive TV system, profiling means are compulsorily confined to the user location, since the reverse connection between the users and the provider is missing. In a system based on Internet, the existence of a reverse connection between the provider and the users is the prerequisite on which the TCP/IP protocol is based.

In the light of points 1., 2., and 3 above, it can be determined that a great part of the functions performed by the "smart agent" installed in computer clients of the profiling and targeting system developed for Internet by INDEX SYSTEMS INC. does not find full justification inside the PC clients. In fact, in lack of anonymity and in presence of point-to point connections, which added value a profiling and filtering software operating in the PC client can confer? In the Applicants' opinion, the profiling in Internet environment can be more profitably developed within the server, which already knows the interactions of the user on the moment they take place, has much more powerful processing means than a PC client, can upstream filter the information to be transmitted to the client thus avoiding to overload the connection with redundant information. The central profiling would avoid also encumbering the client PCs with complex functions that require a careful planning of the operations not to slow the navigation.

The reasons described above, supported by the fact that the smart agent does not appear in any appended claim of the above mentioned INDEX SYSTEMS INC. application, induce to think that this software agent must be considered at most as an attempt to extrapolate the concepts worked out for the Interactive TV in Internet environment, without having well defined the different problems of the two realization environments.

Another problematic aspect of the numerous functions of the smart agent is that tied to the determination of the user profile, remembering to this purpose that the smart agent is a program conceived to collect information such as for instance the type and frequency of the visited Web sites and the information searched by the user. This wide profiling capability, seemingly very interesting, can actually turn out as a boomerang for a software having dimensions suitable to run in a PC. As everybody knows, Web sites that can potentially be explored by a user are several millions, and each site can possibly be associated to different subjects. The resulting combination of information elements to catalogue, in order to infer the type of interaction on the Web contents, is therefore so high to be dominated only by a powerful search engine. Obviously, a sufficient description of an embodiment of the smart agent should indicate means suitable to suitably limit the Web base for the statistical inference on the type of interactions, enabling the updating of a profile with reasonable means and times.

A final significant drawback of the smart agent is that it does not encourage the user to enjoy of the contents of the advertising service, even if the above-mentioned contents are the result of a targeting, based on profiling and filtering. To remedy this insufficiency, it would be necessary to widen the type of interactions to be observed, in order to prevent a too limited number of interactions on the more significant advertisement contents. As just highlighted, such widening involves a drift in calculations, which can be hardly controlled. But the most serious thing is that the lack of incentives to navigation on the contents of the advertising service, practically nullifies the effort made for profiling and makes the update of the contents difficult. In conclusion, the systems of the known art do not seem to be completely suitable to be used for addressing of Internet advertising segmented on the user preferences.

As for the methods of fruition of advertising via Internet, it would be sufficient to connect to more properly commercial sites, such as for instance geocities.com, or xoom.it, and start navigating. It can then be appreciated that advertising in general takes the form of banners located in appropriate areas of the screen, which may include animated images, having variable content going from a sub-domain to the other one (interstitial), or more simply in the same page (superstitial). The user can click on the banners to open the underlying Web page, containing a deeper treatment of the subject announced in the banner. As concerns the navigation opportunities offered by an interactive banner, it is simply added to the other interactive fields normally present on the HTML page. At times it can happen that a banner announces particular discounts on the purchase of a good or of a service, thus encouraging the navigators to click and investigate the opportunities.

On the basis of the all the arguments exposed up to now, the following conclusions can be drawn:

**1.** Apparently, high incentives to the fruition of Web advertising are not possible;
**2.** The implementation of the user profiling and, consequently, the targeting of the proposal result difficult.
**3.** Animated banners, possibly accompanied by sound, do not show advertisement contents in a pleasing way to those who enjoy it.

The first two constraints highlighted above have a common denominator, that is, the immenseness of the Web. As for the drawback appearing at point **1**., an advertisement banner has some hope to be effectively viewed, only if entrusted to a highly visited commercial site. If these commercial sites want to preserve some ease of consultation, they must perform a robust sorting of all the received advertising insert requests, so that many of them would remain excluded or shall migrate to less visited sites. In this case the voice of many advertisers will remain almost unheard. This disproportion in the effectiveness of the advertisement among Internet sites of mainly commercial nature is due to the fact that the navigator, in lack of a powerful incentive mechanism, ends up to almost automatically converge to the more specialized sites, ignoring in practice the other ones.

The reasons for the conclusion at point **2**. have already been given in full measure. Concerning the drawback mentioned under point **3**., it can be explained with the intrinsic nature of the entity defined as the "Web page". Those who are seriously induced to publish a Web page are as well moved by the interest to become well known and explain the opportunities offered by the consultation of their site. It is reasonable that a summary of this information is included in an initial page, which shall also contain the hypertext links to possible subsequent pages. As a result, a small space is left for advertising. Similar arguments also apply to the following pages. It is not by chance that banners are the prevailing advertisement way on the Web. It is also true that there are sites (such as for instance Webshot) showing sets of full screen photographs of naturalistic subject, or of the animal world, with the possibility to download them free of charge for use as PC screen savers. This site, at the end of the set of slides, shows some commercial opportunities in the photographic sector. The navigator ending up to that site is overwhelmed by the attractiveness of the photographs and for sure he or she will download some, thus confirming the popularity of the site. Should advertising be in place of the photographs, though attractive and full screen, and of course free of charge, most probably that site would be rarely or never visited.

**Object of the invention**

Therefore, primary object of the present invention is to overcome the drawbacks of the known art highlighted above, and to indicate a method for the delivery of advertisement contents between an Internet server and client PCs, capable of strongly encouraging the disposition of the user to interact with the contents of the advertising service.

A further object of the invention, strictly deriving from the previous one, is to simplify the targeting of advertisement contents, by enabling the creation of a reliable profile on the basis of interactions made on advertisement contents only.

A further object of the invention is that to supply the user a full-screen advertising image with animation and sound, in addition to text.

A further scope of the invention is that to estimate on a statistical basis the future preferences of the user, enabling the provider to modify the proposed advertisement contents in accordance with the changes in preference and market trends.

**Summary of the invention**

To attain these objects, scope of the present invention is a method of delivery of interactive advertisement contents though an Internet server connected to relevant client PCs, as disclosed in claim 1.

As it can be noticed when reading claim 1, the claimed method has technical characteristics such to envisage a new scenario of the way of advertising availing of Internet. More in particular, the advertisement contents compulsorily enjoyed at step **b**) are confined in the domain of the Internet server; user clients are compensated for the sharp image changes with free navigation time. This implies a substantial coincidence between Internet users and advertising service users. It could be then profitable at step **a**) a coincidence between the Internet provider and the advertising provider, who in the end bears the costs of navigation. In the case assumed, this single provider should evaluate the convenience, or not, to enable also the navigation on Web at a cost to the users that do not accept the advertising service. Another opportunity for the advertising provider is to publish a selection of the contents addressed to the users on Web.

A second technical characteristic of the invention, disclosed in the appended claims, is that the image broadcast at step **b**) is full screen and is free from interactive hypertext fields for the navigation on Web.

A third technical characteristic of the invention, disclosed in the appended claims, is that according to which the server avails of the pre-set time interval for viewing the current advertising image, to download the next advertising image, and that, at the end of the above-mentioned interval, possible residual packets are included in the bitstream originated by the downloading of a Web page, causing an imperceptible slowing of navigation.

**Advantages of the invention**

The main advantage of the present invention is that to guarantee a sure and qualified fruition basis to the providers of Internet advertising. The advertisement contents managed according to the criteria of the invention always reach the users, contrarily to advertising banners of the known art, which incur the risk of "drowning" in the Web sea and of remaining almost invisible. This is due to the fact that the above-mentioned contents are not diffused on the Web, but only in the more limited space of a sub-network subtending to an Internet domain. Why then just to an Internet domain if the diffusion of contents does not follow the Web way? An acceptable answer is that Internet domains are the sole realities in the industry of data networks that nowadays can boast a widespread presence at planetary level, and, since the invention addresses these entities, it can certainly gain an advantage out of it. However, the reason is not of mere opportunity, since the navigation on the Web represents a specific phase of the combination of steps forming the procedure of the invention. Without this navigation phase on Web the procedure itself would not have any ground. The novelty of the subject invention is the use of the navigation on Web not just to download Web advertisement on the PC, but as a strong incentive to the dissemination of targeted advertisement contents within the population of Internet users depending on the domain of a provider. In the Applicants' opinion such a thing had never been seen before. The invention overturns the traditional approach of advertising on Internet, in which the advertiser diffuses the contents on Web in the hope they are viewed, since, according to the new approach, the advertiser does not publish the contents on the Web, nevertheless he or she is made sure that the same are viewed by a sub-group of Web navigators.

Once aware of the existence of the present invention, an advertisement provider shall decide whether and how to apply it. He or she could choose an alternative approach to the Web, or a joint one, or not apply it at all. The last mentioned case shall no doubt concern the operators of large commercial sites, whose advertising has no need for incentives, and the proposed incentives would result too expensive. On the contrary, the first scenario could affect high Internet usage areas, limited to the case in which the advertising provider does not recognize a particular added value to advertising on Web. The second case could be more effective than the first in areas of medium Internet usage.

A second advantage is that to enjoy of a full-screen advertising image with presence of animation and sound, in addition to text. This will make advertising more pleasant to the viewers than the animated banners of Web advertising.

A third advantage is represented by the simplification in the classification of the interactions on the advertisement contents which, contrarily to the smart agent, has not to face the diversified Web reality but is made on fields already perfectly known and prepared on purpose by those who shall then employ the profiling to select the advertisement contents.

**Brief description of figures**

The present invention, together with further objects and advantages thereof, may be understood with reference to the following detailed description, taken in conjunction with the accompanying drawings, in which:

- **Fig. 1** shows an Internet domain in which the method of the present invention is applied;
- **Fig. 2** shows an ISP&PR&AD block of Fig. 1;
- **Fig. 3** shows a general flow chart of a profiling process made by a computer HOST COMPUTER of Fig. 2.

**Detailed description of a preferred embodiment of the invention**

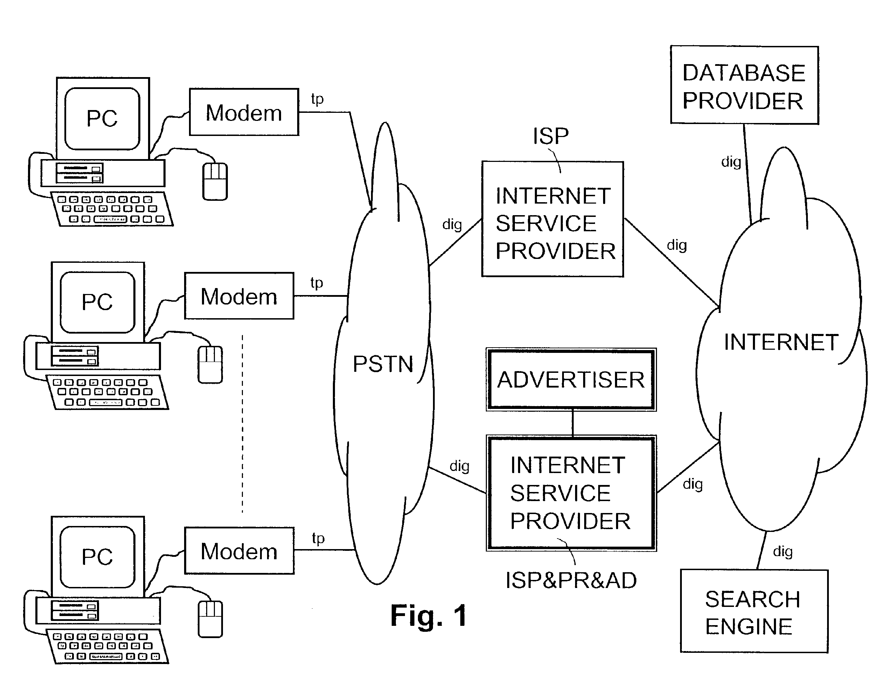

With reference to **Fig. 1**, one can notice a plurality of Personal Computers PC connected, through relevant Modems, to 2-wire telephone loops tp branching from the PSTN (Public Switched Telephone Network), which also supports the ISDN service (Integrated Services Digital Network). The functional blocks INTERNET SERVICE PROVIDER are also connected to the PSTN, through first digital lines dig, connected in turn to the INTERNET network through second digital lines dig. A first INTERNET SERVICE PROVIDER referenced ISP is a normal provider of the known art while a second one, referenced ISP&PR&AD, is additionally connected to a block referenced ADVERTISER. The set of these two blocks belongs to the invention that shall be disclosed. Two remaining blocks, DATABASE PROVIDER and SEARCH ENGINE respectively, are also digitally connected to INTERNET network.

In the operation, the PSTN network supplies to each Personal Computer PC of the plurality shown in **Fig. 1** a connection to the ISP&PR&AD block, through a modem and a dial-up line. The ISP&PR&AD provider gives the PCs the Internet connection service that the Modems obtain dialling a specific urban telephone number. Additionally, the group of the two ISP&PR&AD blocks together with ADVERTISER provides also the particular service to its Internet users of delivering advertisement messages directly on the PC monitor, according to methods which shall be disclosed in short. To fulfil its service, the ISP&PR&AD block includes a Host computer identified in the network by its address, for instance: hostname.domainname.suffix. In the largely diffused case of medium/small Internet providers, the domain name can coincide with that of the host itself, for instance: hostname.com. The present invention involves the processing means included in the ISP&PR&AD block in combination with the means present in Personal Computers PC. The ISP block represents a generic Internet provider that does not employ the opportunities offered by the present invention. The DATABASE PROVIDER block represents a supplier of databases in network, such as a large library. This type of providers is oriented to the transfer of files through an additional protocol called FTP (Transfer File Protocol). Finally, the SEARCH ENGINE block represents a so-called search engine that can be reached at the Web site of an information retrieval program, running on a big computer belonging to an organization for the systematic classification of the items published on the whole World Wide Web. Modems are connected to the user tp 2-wire loops branching from the telephone set (not visible in the figure) and are used, as it is known, for the bi-directional transfer (full-duplex) of data between two digital terminals, converting the digital data into analogue signals suitable to be transmitted on the 2-wire loop. A suitable form is obtained, for instance, modulating by phase discrete steps (m-PSK) a carrier in voice band. The modem operation obeys to protocols issued by the standardization body ITU-T (International Telecommunication Union - Telecommunication Standardization Sector). The protocols, reference to which is made, are those belonging to the series starting with the **V** character. At present, modems having a transmission speed up to 56 kbit/s, belonging to the **V.90** series, are available on the market. Modems operate in pair, that is the modulator section of the equipment on the PC side communicates with the demodulator section of the included in the ISP&PR&AD block, and vice versa. The transmission takes place on switched line inside the PSTN exchange. Nowadays, self-switches of the PSTN exchanges are all of the digital type, so that the analogue signal of the modem is digitized according to the PCM technique, like normal speech. The ISP&PR&AD provider, no matter how small, supplies the Internet connection to some thousand of subscribers. In the very first installations, the host computer was connected to the exchange through a given number of 2-wire telephone loops, and a same number of modems; the number of 2-wire loops was calculated on statistical basis to limit the occurrence of block in traffic peak hours. At present, equipment have advanced and the ISP&PR&AD block is connected to PSTN exchange through time division multiplexing serial digital line, or TDM (Time Division Multiplexing), served by fast modems.

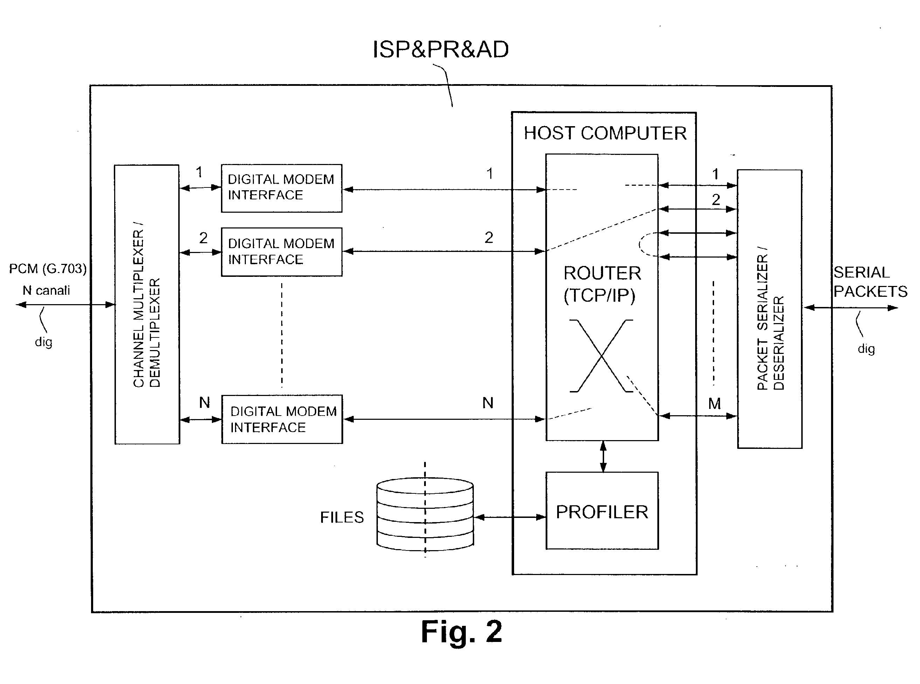

With reference to **Fig. 2**, it can be noticed that the ISP&PR&AD blocks includes the following blocks: CHANNEL MULTIPLEXER / DEMULTIPLEXER, DIGITAL MODEM INTERFACE, PACKET SERIALIZER / DESERIALIZER, HOST COMPUTER, and FILES. The HOST COMPUTER block includes inside a ROUTER (TCP/IP) block and a PROFILER block. The digital line dig PSTN station side is referenced

PCM (CCITT Rec. G. 703) and carries up to N PCM serial channels (Pulse Code Modulation) with the relevant signalling, while the digital line dig at the INTERNET side is indicated with SERIAL PACKETS and carries the serial packets controlled by the TCP/IP protocol. Digital lines dig are bi-directional, as well as all the connections among the different blocks inside the ISP&PR&AD block, since it has to operate in both directions of transmission. The representation in the figure is obviously simplified, since it should be necessary to show two separate ways, one for each direction of signal flow, and divide the blocks of interest among the two ways, except for the HOST COMPUTER and FILES processing blocks. However, the ROUTER block is in practice as if it were doubled, having separate inputs and outputs for each direction. It is also understood that the different blocks have synchronous operation, and are therefore timed by a clock signal generated inside the ISP&PR&AD block, preferably synchronous to the incoming PCM signal. Moreover, also blocks other than the HOST COMPUTER can avail of intelligent controllers to perform the complex functions required by their operation.

The architecture of **Fig. 2** is one of the possible solutions for the realisation of an Internet server; it has value to the purposes of describing the invention, without limiting it to the use of other architectures. The digital line PCM reaches the external side of the CHANNEL MULTIPLEXER / DEMULTIPLEXER block, the internal side of this block shows N ports connected to an equal number of identical DIGITAL MODEM INTERFACE blocks. Each DIGITAL MODEM INTERFACE block is also connected to a relevant port on the internal side of the ROUTER block. The external side of the ROUTER block shows M ports (M > N) connected to a same number of ports of the PACKET SERIALIZER / DESERIALIZER block, whose external side is connected to the digital line SERIAL PACKETS. The PROFILER block is connected to the ROUTER block and to the FILES block.

In the operation, we consider first the direction going from the PCM signal entering the ISP&PR&AD block from left and coming out on the SERIAL PACKETS digital line, after having been processed at the different intermediate stages. Afterwards, the processing in the opposite direction shall be examined. Scope of this processing is to enable the dialogue among terminal users communicating with their PCs through the Internet network. The dialogue is regulated by a protocol defined in its more general form in the ISO (International Standard Organization)

82 standard relevant to the so-called open systems, according to the OSI model (Open Systems Interconnection) with seven stacked layers. The paradigm is that of the added value that Layer N brings to the service received by Layer N - 1. In the case of a data switching network, these protocols are specified at the computer-network interface, and are also universally called DTE-DCE protocols (Data Terminal Equipment — Data Circuit-terminating Equipment).

The protocols having higher impact on the operation of the ISP&PR&AD block of **Fig. 2** are those defined at the three lower layers, in particular:

- Layer 1 protocols, for the management of physical interface signals with the modem, or, more in general, with the transmission medium;
- Layer 2 line protocols;
- Layer 3 computer-network protocols.

The three lower layers are oriented to the solution of data transmission issues and, as such, have a direct impact on the activities of the public telecom authorities that in the various countries have jurisdiction on the management of the national data networks. These authorities have been providing for a long time, in the CCITT/ITU-T frame, to define the standards for the DTE-DCE interface for the circuit switching and packet switching. The recommendations of the **V** series referring to the modems (already mentioned) make a network originally conceived for the switching of voice signals suitable to data switching. While for the networks conceived from the beginning for packet data switching, the recommendations of the **X** series have been introduced. Some national data networks of European and American countries are still based on Rec. **X.25.** However, it must be noticed that the networks for data transmission are increasingly directed towards local (LAN) or metropolitan (MAN) solutions employing other protocols and that, thanks to the constantly increasing popularity of Internet, the TCP/IP protocol (Transmission Control Protocol / Internet Protocol) is becoming in practice the new international standard. The Internet network, developed in an almost independent way from the data national networks (such as ITAPAC in Italy), largely leaning on the PSTN. The Internet user is connected as shown in Fig. 1 and employs a point-to-point protocol, for instance the well known PPP (Point-to Point Protocol), to communicate with the network on the serial line through the modem, and act as if the computer were equipped with a network card. The TCP/IP protocol oversees the dialogue between the network and the modem and, in case of the Microsoft Windows ® platform, it corresponds to the WINSOCK application.

The first block encountered by the PCM entering signal is the CHANNEL MULTIPLEXER / DEMULTIPLEXER block, which multiplexes the N serial channels of the frame entering the N outputs, obtaining the physical separation among the serial channels that are stored for the whole duration of a 125 μs serial frame. The bytes of PCM bits stored on the N outputs are transferred at the input of the relevant DIGITAL MODEM INTERFACE blocks. Each one of these blocks performs the function to digitally demodulate the PCM signal coming from the A/D conversion of the signal transmitted by a relevant Modem in Fig. 1, in order to obtain the original digital data. The demodulation concerns all signals going through the Modem, that is: the signals emitted by the modem during the dialling phase, other control and signalling information on the evolution of the call, and data referring to the user activity. DIGITAL MODEM INTERFACE blocks are fit with intelligence to support the dialogue, acting as DCE, with the Modems of Fig. 1 connected to the DTEs, interpreting and correctly generating the handshake signals foreseen by the protocols of Layer 1. The above-mentioned DIGITAL MODEM INTERFACE blocks perform also the Layer 2 functions of the protocol; for an error-free transmission.

The data coming out from the DIGITAL MODEM INTERFACE blocks reach N inputs of the ROUTER computer for the treatment according to the TCP/IP protocol. The packets coming out from the ROUTER block are sent to the INTERNET network (Fig. 1). The packets TCP/IP coming out from the ROUTER, before being routed, must be serialized through the PACKET SERIALIZER / DESERIALIZER block, which serially transmits on the digital line SERIAL PACKETS the bits of each byte coming from the ROUTER M/2 outputs.

The main operations made by the ROUTER block shall be clear after a brief introduction of some notions on the two TCP and IP protocols, which jointly face the task of routing data packets (datagrams) to remote resources placed anywhere in the Internet super-network, consisting of all the national networks of the globe, differently interconnected among them. In particular, the IP protocol simplifies the routing of datagrams maintaining the independence from the network hardware, and performing an interworking which causes dissimilar networks to appear homogenous. The independence from hardware must necessarily be extended to the addressing scheme of the network resources. The purpose is reached by assigning a 32-bit binary unique number named IP address to each entity capable of independently dialoguing in the network. The high value of this number (DEC. 4.294.967.296) practically makes the resources univocal. An IP address is expressed with four decimal numbers separated by points: one decimal number every 8 bits of IP address. Conversely, the TCP protocol supports the IP protocol and makes it reliable as for the correct transmission of packets through the network. The TCP protocol identifies the terminal points of a connection using the IP addresses of the two host computers involved, and the number of a port of each host where a specific service is supplied. Afterwards, the connection between processes gives the users some sense of immediacy, detached from the particular complexity of the routing. A port can be seen as a connection point to the network. In the server/client paradigm if an application is ready to offer a service, the same is supplied at a port of the host and waits for the clients. A client desiring to make use of that service allocates a port on its local host and connects it to the port of the remote host offering the service. This applies also to the other users who want to have access to the same service at the same time.

As far as routing is concerned, the whole Internet network consists of an important number of networks called "autonomous systems". Each system performs the routing among its internal host computers, so that the task to deliver a datagram in Internet is reduced to finding a path reaching the destination network of the addressed host. The additional addressing is at the care of the destination network. This structure is reflected in the IP addresses, which are conveniently subdivided into a host portion and a network portion. The portion of the network addresses can in turn be subdivided into parts referred to smaller sub-networks, to reflect what results in reality. The bits of the IP address that must be used to address a sub-network are obtained availing of a sub-network mask, also 32 bits in length. The bits of the mask are placed in AND with the IP address, setting to zero the bits of the mask coinciding with the bits of the IP address not to be considered for the addressing of the sub-network (for instance the address bits of an included host). The sub-netting criteria are defined by the network owners or by the administrators, and often are a natural consequence of the constraints in the hardware. Once sub-networks are defined, the horizon of a host computer is very limited, since it can directly communicate only with the hosts belonging to the same sub-network, the external hosts are accessible only through special-purpose computers, called gateways. A gateway is a host computer simultaneously connected to two or more physical networks and configured to switch packets among them. The main function of the IP protocol, consisting in the routing a packet in Internet, is then reduced to that of finding, step by step, an appropriate gateway that takes on the initial packet of a new connection, until it reaches the destination sub-network. Once the route is open, the other packets will automatically follow. The above indicates that the IP protocol searches a path in the network through a self-routing process. To facilitate things, "routing tables" are foreseen. A routing table is a table referred to a network including a number of sub-network addresses and for each sub-network address a sub-network mask, an IP address of a gateway, and the type of interface. The condition to check if a path in the network can lead to the IP destination address, consists in placing in AND the sub-network mask with the sub-network IP address, and said sub-network mask with the destination IP address, and check the coincidence of the results of the two AND operations. The IP protocol searches the shortest path through the comparisons of the type mentioned above. A routing table can have several inputs satisfying a same comparison. The IP protocol selects the one having the larger mask out of two paths equally satisfying the comparison, since, greater the number of coinciding bits of the mask, closer is the address target. For small local networks the routing table can be manually made and then loaded in the IP protocol through the "route" control during the boot. For larger networks, the routing table is created and updated during the operation, through the so-called routing daemons, which are appropriate programs residing in the central hosts of the network. The routing tables thus updated are supplied to the network members. In the Host computer of Fig. 2 the ROUTER block selects the gateway to which a datagram has to be sent, on the basis of a metric associated to the input of the local routing table. The metric reflects the actual cost of the path in the network, expressed as number of jumps from a gateway to another that a datagram must perform before reaching a host or a destination network.

The operation of the ISP&PR&AD block of **Fig. 2** has been described up to now concerning the left to right flow of signals, now the opposite direction shall be considered, but at this point the frame has already been simplified. In detail, the serial packets on the SERIAL PACKETS line enter the PACKET SERIALIZER / DESERIALIZER block and are multiplexed on the M/2 outputs towards an equal number of inputs of the ROUTER. The TCP/IP protocol there present analyzes the IP address and determines the type of routing on the basis of the local routing table. If the packet has to be sent on to the INTERNET network, then the IP address of the appropriate gateway is written, and the packet is sent to an output of the ROUTER block towards the PACKET SERIALIZER / DESERIALIZER block. The latter includes the packet in the SERIAL PACKETS digital line directed towards the INTERNET network of Fig. 1. From there, the packet shall be routed in the direction indicated in the new address. On the contrary, if the packet is destined to the PSTN exchange, then it is sent on towards a corresponding DIGITAL MODEM INTERFACE block. Depending on the data received, the latter opportunely modulates a digital carrier synchronous with the digital data. The digital carriers, modulated according the ITU-T recommendations, and coming out from the N DIGITAL MODEM INTERFACE blocks, consist of bytes reaching a corresponding number of inputs of the CHANNEL MULTIPLEXER / DEMULTIPLEXER block. This block serializes each byte and time division multiplexes it in the PCM digital signal directed to the PSTN exchange of **Fig. 1.** Inside said public exchange, each channel is newly separated, then switched, and finally data are transformed to analogue and sent to the relevant Modem DTE side on the 2-wire loop tp. The Modem demodulates the analogue signals and returns the digital data of the packet to the PC for the termination of the PPP protocol.

Finally, the PROFILER block is considered, also included in the HOST COMPUTER and connected to the ROUTER. This block is a general-purpose processor, oriented to the management of databases and to the execution of user profiling applications. It also performs support and maintenance tasks for the ROUTER concerning the needs of the relevant TCP/IP protocols. The PROFILER block is connected to the file FILES on disk, jointly used by ISP&PR&AD and ADVERTISER blocks, and contains the following information: personal details of the users and additional sensitive data, a collection of multimedia advertising images of the shock-wave type including interactive fields, the history of interactions made by the users on said interactive fields; the user individual profiles updated on the basis of the recent history of interactions; the applications for the user profiling; the applications for the selection of sub-sets of advertising images to be transmitted in sequence to each user on the basis of the updated profile; the boot software and the operating system. The PROFILER operates in close relation with the Personal Computers PC of users (Fig. 1). These have a hard disk where a browser is installed for the reception of HTML pages coming from the navigation in the network. An application software is also installed in personal computers making the PCs suitable to receive the files of shock-wave advertising images and show them on the PC screen, in compliance with the scanning methods that shall be disclosed below; an application is also installed recording in a file all the interactions made with the mouse or the keyboard on the interactive fields of advertisement pages. Interactions are also instantly sent to the PROFILER block on the very moment of their execution. The PROFILER block is connected to the ROUTER for the bi-directional communication with the user PCs. The file FILES includes an application enabling the PROFILER processor to segment a file of shock-wave images to be transmitted to a PC, into packets of appropriate length, preceded by a header indicating the length of the message. The available band of each channel is equitably divided between the information coming from an HTML page received by the Web and the file containing the advertising image. This is in line with what generally happens during the Internet navigation. Browsers like Netscape and Explorer enable in fact to open more Web pages at the same time, coming from different URLs. Since the ROUTER considers the information on the channel "in transit", meaning that it does not allocate memory buffers for the queues, the result is that the available band (the one permitted by the Modem) is automatically shared among the different files sharing the channel. It results that the reception shall suffer an average delay in proportion to the number of pages, or of files, simultaneously active on the channel.

The dynamics of the method of delivery of the advertising service according to the present invention is now disclosed with reference to the figures. In particular, the following steps are highlighted:

**a)** A client PC sends a request for connection to the site of the advertising service supplier to the HOST COMPUTER belonging to the ISP&PR&AD block, to make a free navigation to be charged to the advertising supplier, who can conveniently be also the Internet service supplier.

**b)** The HOST COMPUTER establishes the connection to Internet and simultaneously transmits to the client PC a shock-wave advertising image including one or more interactive fields, preferably in the form of buttons, associated to questions directed to the semantic and/or aesthetic context of the contents that can be enjoyed on the screen. The image is selected among those produced by the supplier of the advertising service and included in the FILES.

**c)** The client PC opens the file of the advertising image received by the HOST COMPUTER and keeps the advertising image on the screen for a pre-set viewing time, during which the user can view the full-screen advertising image without hypertext fields for the Web navigation, and can perform the interactions on the interactive buttons of the image with the mouse or the keyboard, thus answering to the questions raised, the client PC checks the performance of interactions and transmits them to the HOST COMPUTER as they occur, and stores them on the local hard disk for additional reliability. On completion of the interactions foreseen within the pre-set viewing time, the program changes the image on the screen from the current one to that of the Web page of the connected site, enabling the user to navigate on the Web, while in the opposite instance, the program ends the connection to Internet upon expiration of the pre-set viewing.

**d)** The HOST COMPUTER selects in the FILES database a new advertising image that better matches the updated user profile and transmits it to the client PC that stores it.

**e)** The PC client keeps the new advertising image hidden up to the end of the time interval reserved to the free navigation of the user through the Web, then the steps starting from **c)** onward are cyclically repeated up to the end of the connection to Internet.

Advantageously, during the connection to Internet, step **d)** can be started simultaneously with the previous step **c)**, thus reducing the delay to the Web navigation.

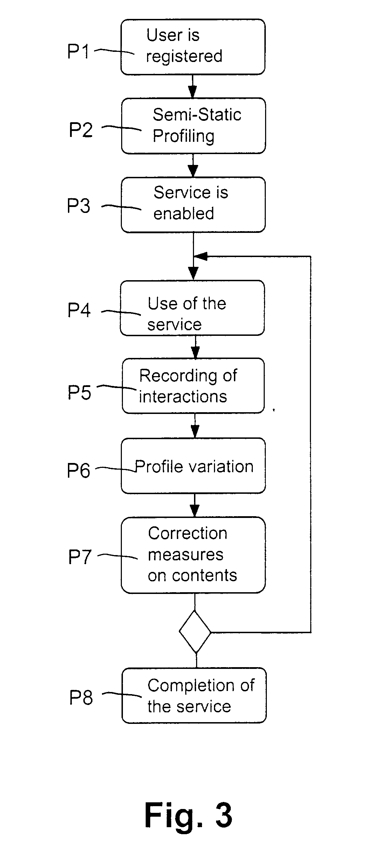

The execution of step d) requires the knowledge of the methods of user profiling and of advertisement contents selection. This knowledge shall be supplied with the description of **Fig. 3**, and with the general features of profiling presented below.

The fundamental steps defining the aspects of profiling concern the definition:

**A.** Of the final user characteristics;

**B.** Of the profiling targets, that in this case are represented by the contents transmitted to the final user.

As for the elements univocally identifying the service user, the important data to the purposes of the identification of his/her behaviour are:

- social-demographic characteristics,
- geographic characteristics and/or concerning the residence,
- family composition.

These elements should be acquired at the time of service subscription. The main feature of this *profiling* segment, that we shall call *semi-static profiling,* is represented by its slow variation in time, that is, sociologic and behavioural characteristics vary, in general, more slowly than the preferences expressed on the broadcast contents. The elements defining the *profiling targets* are:

- the *type,* which is a multidimensional classificatory variable, that is, it takes as many values as are the types of contents proposed,
- the number of contents with which the final user interacts, or *interactions,* that on the contrary is a simple numeric variable that can be translated in a group of time sets.

Following this *profiling* structure, it becomes evident that the variables defined as *type* and *interaction,* depend on the *semi-static profiling.* At the initial time, $t_0$, when the user subscribes to the service, a classification is made on the basis of the social - demographic, geographic characteristics and of the features relevant to the family composition. During the operation period, the use of the service shall be detected, at different time instants $(t_1, t_2, ..., t_n, ...)$, by recording the number of interactions made by the single user for each type of content proposed. Together with these data, information of other nature could be stored, but always concerning the type of utilization of the service itself. For instance, information such as: how many times the tool for Internet access is used, which IP addresses are more frequently requested, which type of content is accessed by the portal (news, games, music, etc.) shall be recorded.
In practice a vector variable $\bar{u}_k(t)$ shall be assigned to each user, which in general shall vary in time in dependence of the way the service offered is employed. This variable, univocal for each user, shall be of the type:

$$\overline{u}_k(t) = \left( u_k^1, ..., u_k^q, \sum_t T_{k,t}^1, ..., \sum_t T_{k,t}^s, \sum_t N_{k,t}^1, ..., \sum_t N_{k,t}^p \right)$$

where the subset $(u_k^1, ..., u_k^q)$ defines the *semi-static profiling,* while the summations of the

$$\sum_t T_{k,t}^h$$

type made on a time space defined in advance, represent the times the user has viewed a content of the $T^h$ type ($h$ is the dimensional index of the content typology); finally the summations of the

$$\sum_t N_{k,t}^m$$

type made on the same time space, represent the sum of interactions made by the user concerning a given segment of interest, for instance the interactions performed from the start of service operation (in the home where it is installed) in relation to the credits acquired, or in relation to the additional information requested on particular types of contents, etc.
With reference to **Fig. 3,** a diagram of the *profiling* dynamics is now described, starting from step **P1** where the user accepts the conditions of the service and is registered. In the next step **P2** the registration data, together with additional data not subject to short-term variation, co-operate in forming a *semi-static profiling* of the user. Service is enabled at step **P3**. The service is characterized by a repetitive profiling cycle including steps **P4** to **P7**. Step **P4** refers to the comments made by the user on the proposed contents. Step **P5** refers to the recording of interactions made by the user on multimedia contents following to the comments of step **P4**. The above mentioned recordings are added to those of the previous navigation sessions, so that, as the time of overall use of the service increases, the system is able to accumulate preferences, interactions, and utilization types operated by the user. Consequently, each single profile $\bar{u}_k(t)$ is subject to a continuous updating.
When the profile *database* is adequately populated (concerning the single profile considered), in terms of preferences expressed by the user in the utilization of the service, the utilization forecast module is activated. Namely, for each single time series given by the variables $T^h$ or $N^m$, and in relation to each single user, a forecast analysis of the future values of the variables themselves is made. Hence, in practice, the *profiling* analysis made, enables to identify at step **P6** the next future values concerning the interactions that are likely to be made and the type of contents more enjoyable. On the basis of this forecast, a profile variation is introduced in the same step **P6.** Of course, as a result of such a predictive analysis and against a critical utilization of the service, it shall be possible to take at step **P7** *correction* measures as for the type of contents sent and of interactions proposed, up to completion of the service at step **P8**. This approach enables an optimization of the system utilization.

In the assumptions on fruition considered up to now, it has been assumed that, at the use start, a carousel of contents is shown to the end user, starting from *a-priori* considerations on the possible preference pattern for the user range in which the individual user is placed. After the *profiling* analysis on the cases acquired, it will be possible to infer on the new users subscribing to the service, identifying the closest existing profile to the same. Therefore, the same typology of contents proposed to the user already acquired, whose *semi-static* profile is more similar to that of the new user shall be proposed to each new user. This shall be possible through a dedicated *clustering* analysis.

Concerning the analysis of the historical series relating to the variables of the $T^h$ and/or $N^m$ type and their subsequent forecast, it is possible to refer to the many methods present in the literature. Among these, a preferred algorithm is that based on a learning rule variable in time that can be referred to the capability of generalization of neural networks, described in the following references:

- A. Ballarin, S. Gervasi, V. Cannatà: A classification neural algorithm using a time varying learning rule; *Invited paper* at the *First International Conference on Neural Parallel and Scientific Computation;* Atlanta, USA, 1995;
- A. Ballarin, S. Gervasi: Political Surveys and Scenario Simulations; Papers of the Second International Conference on Cognitive and Neural Sciences, Boston, USA, May 1998;
- A. Ballarin, S. Gervasi, F. Giancarli, F. Cecere: A Categorization Methodology for the Analysis of the Mortality Rate in Psychiatric Hospitals; Papers of the International Joint Conference on Neural Networks, Como, Italy July 2000.

Other valid methods to this purpose and universally known are those related to the works made by U.S. organizations such as Gallup or Harris in the forecast of poll results. The above mentioned teachings as a whole lead to the definition of the profiling and prediction software of **Fig. 3** controlling the PROFILER processor of **Fig. 2.**

## Claims

1. Method of delivery of advertisement interactive contents by a host computer operating as an Internet server, connected to relevant client PCs at the users' disposal, who interact with said advertisement contents that can be seen on the screen of their PCs to express choices, which appropriately processed, generate individual user profiles that reflect the preference of the users for particular market sectors, said profiles being used by a supplier of the advertising service to select said contents delivered on the screen, **characterized in that** it includes the following steps:

   **a)** one of said client PC sends a connection request to said host computer to be connected to the site of the advertising service supplier, requesting to make a free navigation to be charged to the advertising service supplier himself;
   **b)** said host computer establishes the connection to Internet and simultaneously transmits to said client PC an advertising image including one or more interactive fields, preferably in the form of push-buttons, associated to questions directed to the semantic and/or aesthetic context of the contents that can be enjoyed on the screen, being the image selected among image files produced by the advertising service supplier and included in a database accessible to the host computer;
   **c)** said client PC opens the advertising image file received from the host computer and holds the advertising image on the screen for the duration of a defined viewing time, during which the user can see the advertising image and make the interactions on the interactive buttons of the image with the mouse or the keyboards, thus answering to the questions raised; said client PC checking at the same tine the accomplishment of interactions to transmit them to said host computer on the moment they are made; said client PC, on completion of the foreseen interactions within the defined viewing time, switching the image on the screen from the current one to that of the Web page of the visited site, enabling the user to navigate on the Web; said client PC ending the connection to Internet when said defined observation time has elapsed in case said interactions have not been completed by the user;
   **d)** said host computer selects a new advertising image that better matches the user profile among the advertising image files and transmits it to the client PC that stores it;

**e)** The client PC keeps said new advertising image hidden up to elapsing of a time interval reserved to the free navigation of the user through the Web, afterwards steps starting from **c)** are cyclically repeated up to the end of the Internet connection.

2. Method of delivery of advertisement contents according to claim 1, **characterized in that** the image transmitted by the server at step **b)** is a full screen image and without hypertext interactive fields for navigation on Web.

3. Method of delivery of advertisement contents according to claim 1 or 2, **characterized in that** the image transmitted by the server at step **b)** includes colour animation, possible text and sounds.

4. Method of delivery of advertisement contents according to any of the previous claims, **characterized in that** the server does not interrupts the downloading of a Web page in the hard disk of the client PC during said defined viewing time of the current advertising image.

5. Method of delivery of advertisement contents according to any of the previous claims, **characterized in that** during the connection to Internet, said step **d)** starts simultaneously to the previous step **c)**, thus limiting the delay in the navigation on the Web.

6. Method of delivery of advertisement contents according to any of the previous claims, **characterized in that** said supplier of the advertising service publishes also on the Web, wholly or in part, said advertisement contents of the image transmitted on the PC screen at said steps **b)** and **d)**.

7. Method of delivery of advertisement contents according to any of the previous claims, **characterized in that** said advertising service supplier is also the supplier of the Internet service.

8. Method of delivery of advertisement contents according to any of the previous claims, **characterized in that** said profile consists of a semi-static portion including elements enabling to univocally identify the service user, and of a dynamic portion based on stored said interactions.

9. Method of delivery of advertisement contents according to any of the previous claims, **characterized in that** said stored interactions are used to forecast future interactions on multimedia contents on a statistical basis.

10. Method of delivery of advertisement contents according to claim 9, **characterized in that** said forecasts on a statistical basis employ a neuronal algorithm based on a learning rule variable in time.

11. Method of delivery of advertisement contents according to claim 9 or 10, **characterized in that** said forecasts on a statistical basis are used to consistently change the user profile.

12. Method of delivery of advertisement contents according to any claim 9 to 11, **characterized in that** said forecasts on a statistical basis are used by the supplier of the advertising service to propose preferred advertising images to the users.

13. Method of delivery of advertisement contents according to any claim 9 to 12, **characterized in that** the same advertising images already proposed to an already acquired user, whose semi-static profile is more similar to that of the new user are proposed to each new user.

**Fig. 1**

EP 1 217 560 A1

**Fig. 2**

EP 1 217 560 A1

**Fig. 3**

**European Patent Office**

## EUROPEAN SEARCH REPORT

Application Number

EP 00 83 0842

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 00 42536 A (COLLINS JAMES ROGER ;FREECAST INTERNATIONAL PTY LTD (AU)) 20 July 2000 (2000-07-20) * the whole document * | 1,4,7-9 | G06F17/60 |
| A | WO 00 13434 A (DAUM STEVEN B ;REBEL RICHARD (US); SMART WORLD TECHNOLOGIES LLC (U) 9 March 2000 (2000-03-09) * page 3, line 1 - page 3, line 28 * * page 4, line 16 - page 5, line 12 * * page 5, line 29 - page 9, line 30 * * page 10, line 16 - page 12, line 20 * * page 13, line 5 - page 17, line 6 * | 1,4,6-9, 11,12 | |
| A | WO 00 73961 A (NETZERO INC) 7 December 2000 (2000-12-07) * page 6, line 2 - page 7, line 11 * * page 9, line 2 - page 11, line 3 * * page 12, line 5 - page 13, line 11 * * page 14, line 4 - page 16, line 24 * * page 17, line 21 - page 17, line 23 * * page 19, line 4 - page 19, line 23 * * page 20, line 16 - page 22, line 12 * * page 26, line 13 - page 27, line 9 * | 1,3,6-8 | |
| | | | TECHNICAL FIELDS SEARCHED (Int.Cl.7) G06F |
| A | WO 00 54201 A (NETZERO INC) 14 September 2000 (2000-09-14) * column 5, line 1 - column 5, line 7 * * column 7, line 5 - column 7, line 13 * * column 9, line 8 - column 10, line 13 * * column 13, line 1 - column 15, line 8 * * column 16, line 4 - column 20, line 2 * | 1,8-13 | |
| A | US 6 119 098 A (GAUTIER LAURENT ET AL) 12 September 2000 (2000-09-12) * column 1, line 55 - column 2, line 42 * * column 3, line 13 - column 6, line 60 * * column 8, line 14 - column 10, line 22 * | 1,8,9 | |

-/--

The present search report has been drawn up for all claims

| Place of search | Date of completion of the search | Examiner |
|---|---|---|
| MUNICH | 18 May 2001 | Aupiais, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 217 560 A1

European Patent Office

**EUROPEAN SEARCH REPORT**

Application Number

EP 00 83 0842

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | WO 00 49801 A (INDEX SYSTEMS INC ;HANCOCK KENNETH S (US); MACRAE DOUGLAS (US); NE) 24 August 2000 (2000-08-24) * page 3, line 34 - page 10, line 32 * * page 16, line 17 - page 16, line 29 * * page 23, line 15 - page 27, line 32 * | 1-3,8-13 | |

TECHNICAL FIELDS SEARCHED (Int.Cl.7)

The present search report has been drawn up for all claims

| Place of search | Date of completion of the search | Examiner |
|---|---|---|
| MUNICH | 18 May 2001 | Aupiais, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**EP 1 217 560 A1**

## ANNEX TO THE EUROPEAN SEARCH REPORT
## ON EUROPEAN PATENT APPLICATION NO.

EP 00 83 0842

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2001

| Patent document cited in search report | | Publication date | Patent family member(s) | | Publication date |
|---|---|---|---|---|---|
| WO 0042536 | A | 20-07-2000 | AU<br>AU | 2424300 A<br>721885 A | 01-08-2000<br>13-07-2000 |
| WO 0013434 | A | 09-03-2000 | AU | 5907699 A | 21-03-2000 |
| WO 0073961 | A | 07-12-2000 | AU | 5048500 A | 18-12-2000 |
| WO 0054201 | A | 14-09-2000 | AU<br>AU<br>AU<br>AU<br>EP<br>WO<br>WO | 3874300 A<br>2074300 A<br>3874200 A<br>5449800 A<br>1045547 A<br>0075850 A<br>0079448 A | 28-09-2000<br>14-09-2000<br>28-12-2000<br>09-01-2001<br>18-10-2000<br>14-12-2000<br>28-12-2000 |
| US 6119098 | A | 12-09-2000 | NONE | | |
| WO 0049801 | A | 24-08-2000 | AU | 3601200 A | 04-09-2000 |

EPO FORM P0459

For more details about this annex : see Official Journal of the European Patent Office, No. 12/82